# EUROPÄISCHE PATENTSCHRIFT

(11) **EP 3 377 764 B1**
(45) Veröffentlichungstag und Bekanntmachung des Hinweises auf die Patenterteilung: **30.10.2019**
(21) Anmeldenummer: 16798434.3
(22) Anmeldetag: 10.11.2016
(51) Int. Cl.: F04B 39/16, F04B 53/04, F04B 53/10, F16T 1/14

(54) **PNEUMATISCH GESTEUERTES ENTWÄSSERUNGSVENTIL**
PNEUMATICALLY CONTROLLED DRAIN VALVE
PURGEUR D'EAU À COMMANDE PNEUMATIQUE

(30) Priorität: 16.11.2015 DE 102015119768
(43) Veröffentlichungstag der Anmeldung: 26.09.2018
(73) Patentinhaber: KNORR-BREMSE Systeme für Schienenfahrzeuge GmbH, 80809 München (DE)
(72) Erfinder: KIPP, Thomas, 81547 München (DE); AFSHAR, Ehsan, 82143 München (DE); FRICKE, Adrian, 80807 München (DE)
(86) Internationale Anmeldenummer: PCT/EP2016/077263
(87) Internationale Veröffentlichungsnummer: WO 2017/084961

(56) Entgegenhaltungen:
- WO-A1-2011/060909
- DE-A1- 1 814 301
- GB-A- 740 309
- GB-A- 859 843
- US-A- 2 162 549

## Beschreibung

Die vorliegende Erfindung betrifft ein Entwässerungsventil für einen Kühler eines Kompressors mit einem Druckraum, welcher über eine Verbindungsöffnung mit dem Innenraum des Kühlers verbindbar ist und mit einer Austrittsöffnung zum Ableiten eines Kondensats. Das Ventil weist eine pneumatische Schalteinrichtung sowie ein Rückschlagventil auf, welche mit dem Druckraum wirkverbunden sind.

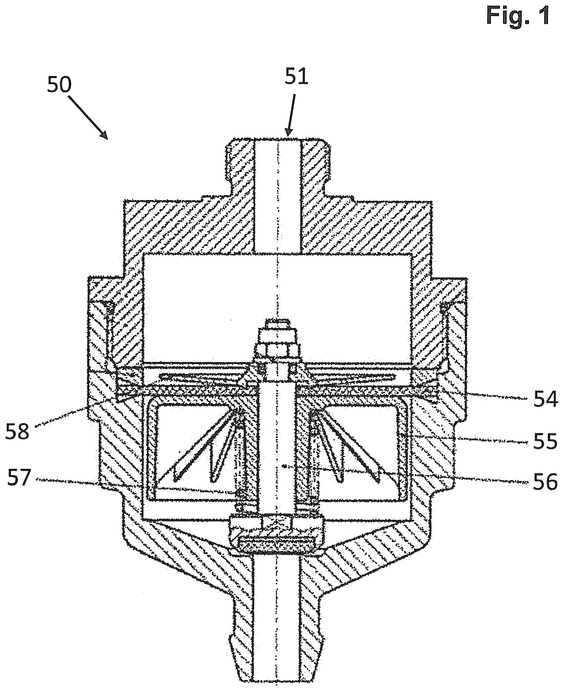

Im Stand der Technik sind pneumatisch gesteuerte Entwässerungsventile bekannt, wie eines beispielsweise in Fig. 1 in Einsatzposition dargestellt ist. Bei diesem Ventil wird während des Betriebs des Kompressors eine Luftglocke entgegen der Federkraft nach unten gedrückt, wodurch das etwa zentral in diesem Entwässerungsventil angeordnete Einlassventil geöffnet wird, so dass Druckluft und Kondensat in den Glockenraum unterhalb einer Membran fließen kann, während der an der unten angeordneten Auslassöffnung sitzende Ventilkolben das Ventil schließt. Das Einlassventil bleibt geöffnet, so lange der Druck oberhalb der Membran steigt. Bleibt der Druck dann während des Stationärbetriebs des Kompressors konstant, wandert die Luftglocke aufgrund des Druckausgleichs durch die Federkraft nach oben und schließt das zentral angeordnete Einlassventil. Das unten angeordnete Auslassventil ist dabei aufgrund des höheren Drucks oberhalb der Membran geschlossen. Im Ruhebetrieb fällt der Druck oberhalb der Membran. Durch die entstehende Druckdifferenz bewegt sich die Membran mit der Luftglocke nach oben, wodurch das Auslassventil geöffnet wird und das unterhalb der Membran im Glockenraum angesammelte Wasser abfließen kann.

Da bei diesem bekannten Stand der Technik das zentral angeordnete Einlassventil während des Betriebs des Kompressors nur wenige Sekunden geöffnet ist, ermöglicht dieses Entwässerungsventil nur den Ausstoß geringer Mengen an Kondensat. Aufgrund des Schaltmechanismus wird während des Ruhebetriebs des Kompressors immer das zuvor im Glockenraum gesammelte Kondensat entleert. So kann sich auch Kondensat auf der Membran ansammeln und während des Ruhebetriebs des Kompressors dort verbleiben. Dies kann eine Beschädigung der Membran zur Folge haben.

Bei Kompressoren entsteht bei der Luftverdichtung im Kühler kondensiertes Wasser. Bekannte pneumatisch gesteuerte Entwässerungsventile, wie das zuvor beschriebene und in Fig. 1 beispielhaft gezeigte Entwässerungsventil entwässern den Kühler nach dem Abschalten des Kompressors nicht ausreichend. Ferner ist die Entwässerungsmenge durch das Füllvolumen des Ventils begrenzt. Dadurch sammelt sich Kondensat im Kühlerraum an, welches die Funktion des Kompressors beeinträchtigt. Auch die Funktionssicherheit solcher Ventile wird aufgrund des sich ansammelnden Kondensats auf der Membran eingeschränkt, da aggressives Kondensat die Membran zerstören und deren Lebensdauer verkürzen kann. Dichtet die Membran aufgrund einer Beschädigung nicht mehr zuverlässig ab, kann auch bei geschlossenem Einlassventil Druckluft und Kondensat in den Glockenraum und damit insbesondere auch nach außen strömen, wodurch der Kompressor erheblich an Förderleistung verliert.

Dokumente GB 859 843 A und US 2,162,549 A offenbaren jeweils ein automatisches Entwässerungsventil mit einem Druckraum mit einer Verbindungsöffnung, die mit einem Kühler verbindbar ist, und einer Austrittsöffnung zum Ableiten eines Kondensats. Ferner weist das Entwässerungsventil eine pneumatische Schalteinrichtung und ein Rückschlagventil auf, die mit dem Druckraum wirkverbunden sind. Zwischen der Schalteinrichtung und dem Rückschlagventil besteht eine Wirkverbindung, mittels welcher das Rückschlagventil von der Schalteinrichtung in eine Offenstellung schaltbar ist. Das Rückschlagventil ist im Kompressorruhebetrieb mittels der Schalteinrichtung in eine Offenstellung schaltbar, so dass Kondensat von der Verbindungsöffnung über das Rückschlagventil durch die Austrittsöffnung ableitbar ist.

Ausgehend von den Nachteilen des bekannten Stands der Technik soll ein verbessertes Entwässerungsventil für einen Kühler eines Kompressors zur Verfügung gestellt werden, welches die Funktion und Funktionssicherheit der Entwässerung eines Kühlers eines Kompressors verbessert.

Zur Lösung dieser Aufgabe wird ein Entwässerungsventil für einen Kühler eines Kompressors mit einem Druckraum vorgeschlagen, welcher über eine Verbindungsöffnung mit dem Innenraum des Kühlers verbindbar ist und eine Austrittsöffnung zum Ableiten eines Kondensats aufweist. Das vorgeschlagene Ventil weist eine pneumatische Schalteinrichtung sowie ein Rückschlagventil auf, welche mit dem Druckraum wirkverbunden sind, wobei zwischen der Schalteinrichtung und dem Rückschlagventil eine Wirkverbindung besteht, mittels welcher das Rückschlagventil von der Schalteinrichtung in eine Offenstellung schaltbar ist. Im Kompressorruhebetrieb ist das Rückschlagventil mittels der Schalteinrichtung in eine Offenstellung schaltbar, so dass Kondensat von der Verbindungsöffnung über das Rückschlagventil durch die Austrittsöffnung ableitbar ist.

Das vorgeschlagene Entwässerungsventil für einen Kühler ist über eine Verbindungsöffnung mit dem Innenraum des Kühlers verbindbar. Bei einer bevorzugten Ausführungsform wird die Verbindungsöffnung mit einem Bereich des Innenraums des Kühlers verbunden, in welchem sich das beim Verdichten der Luft kondensierende Wasser sammelt, so dass dieses Kondensat vom Kühler über die Verbindungsöffnung in das Ventil eintreten kann. Während der Verwendung des Entwässerungsventils tritt aufgrund des hohen Drucks im Kühler durch die Verbindungsöffnung insbesondere ein Druckluft-Kondensat-Gemisch in das Entwässerungsventil ein. Da der Anteil an kondensiertem Wasser und Druckluft im Druckluft-Kondensat-Gemisch abhängig von den Betriebsparametern und der bereits aus dem Kühler abgeleiteten Kondensatmenge variiert, wird hier im Folgenden allgemein die Bezeichnung Druckluft-Kondensat-Gemisch verwendet, womit auch Gemische, die weitgehend nur aus Druckluft oder weitgehend nur aus Kondensat bestehen eingeschlossen sind, auch wenn das Entwässerungsventil grundsätzlich zum Ableiten des Kondensats vorgesehen ist.

Das Kondensat sammelt sich insbesondere in einem unteren Bereich des Druckraums, von wo aus eine Ableitung des Kondensats aus dem Entwässerungsventil erfolgt. Hierfür weist das Entwässerungsventil eine Austrittsöffnung zum Ableiten des Kondensats vom Kühler insbesondere nach außen auf.

Das erfindungsgemäße Entwässerungsventil weist eine pneumatische Schalteinrichtung auf, auf welche der Druck des durch die Verbindungsöffnung in das Entwässerungsventil eingeströmte Druckluft-Kondensat-Gemischs wirkt. Die Schalteinrichtung schaltet abhängig von dem auf diese wirkenden Druck im Druckraum, ebenso wie ein auch am Druckraum angeordnetes Rückschlagventil. Der im Druckraum anliegende Druck wirkt folglich sowohl auf die Schalteinrichtung als auch auf das Rückschlagventil, so dass Schalteinr
ichtung und Rückschlagventil mit dem Druckraum wirkverbunden sind.

Ferner besteht zwischen der Schalteinrichtung und dem Rückschlagventil eine Wirkverbindung in der Weise, dass die Schalteinrichtung auf das Rückschlagventil wirkt und dabei das Rückschlagventil von der Schalteinrichtung in eine Offenstellung schaltbar ist. Die Schalteinrichtung ist dabei so ausgebildet, das diese im Kompressorruhebetrieb, d. h. wenn kein oder nur ein geringer Überdruck im Druckraum anliegt, das Rückschlagventil in eine Offenstellung schaltet. In dieser Offenstellung ist Kondensat von der Verbindungsöffnung des Entwässerungsventils über das Rückschlagventil durch die Austrittsöffnung des Entwässerungsventil ableitbar. Dadurch kann sich im Kühler des Kompressors während des Kompressorruhebetriebs gesammeltes Kondensat über die Verbindungsöffnung durch das geöffnete Rückschlagventil und durch die Austrittsöffnung abgeleitet werden. Da das Rückschlagventil, insbesondere während des gesamten Kompressorruhebetriebs in der Offenstellung verbleibt, kann so das an der Verbindungsöffnung anstehende Kondensat insbesondere durch den Restdruck des Kühlers aus diesem über das Entwässerungsventil abgeleitet werden, wenn der Druck im Zwischenkühlerkreis abgebaut wird. So wird das Kondensat insbesondere im Kompressorruhebetrieb abgeleitet, so dass die Funktion des Kompressors dabei nicht beeinträchtigt wird. Dadurch, dass das Rückschlagventil, welches den Kühlerraum mit der Austrittsöffnung verbindet, geöffnet bleibt, ist die Menge des Kondensats, welches aus dem Kühler ableitbar ist, nicht begrenzt. So kann sich auch kein Kondensat im Entwässerungsventil ansammeln, was zu Schäden am Entwässerungsventil führen könnte. Das erfindungsgemäße Entwässerungsventil ist folglich im drucklosen Betriebszustand des Kühlers geöffnet und schließt während des Kompressorbetriebs.

Während des Kompressorbetriebs ist aufgrund der Wirkung des im Druckraum herrschenden Drucks die Wirkverbindung zwischen der Schalteinrichtung und dem Rückschlagventil getrennt. Damit ist die Funktion des Rückschlagventils unabhängig von der Schalteinrichtung. Im Druckraum liegt während des Kompressorbetriebs der Überdruck des Kompressors an, wodurch die Schalteinrichtung so geschaltet wird, dass die Wirkverbindung zwischen dieser und dem Rückschlagventil getrennt ist. Dadurch wird die Funktion des Rückschlagventils nicht weiter durch die Schalteinrichtung beeinflusst.

Bei einer Weiterentwicklung des Entwässerungsventils ist das Rückschlagventil durch den am Rückschlagventil anliegenden Druck im Druckraum in eine Offenstellung schaltbar, wenn der Druck im Druckraum insbesondere während des Betriebs des Kompressors einen vorbestimmten Wert überschreitet. Dadurch, dass bei Anliegen
eines ausreichend hohen Drucks die Wirkverbindung zwischen der Schalteinrichtung und dem Rückschlagventil getrennt ist, schaltet das Rückschlagventil infolge des am Rückschlagventil anliegenden Drucks im Druckraum. Überschreitet der Druck im Druckraum einen vorbestimmten Wert, was insbesondere im Falle großer Kondensatmengen während des Kompressorbetriebs vorkommen kann, überschreitet der Druck im Druckraum einen vorbestimmten Wert am Rückschlagventil, wodurch dieses in eine Offenstellung schaltet und dort insbesondere so lange verbleibt, bis der Druck im Druckraum wieder unter diesen vorbestimmten Wert fällt. Dadurch kann das Kondensat bzw. insbesondere auch ein möglicherweise bei einem Fehlbetrieb entstehender Überdruck im Kühler über die Verbindungsöffnung und das geöffnete Rückschlagventil durch die Austrittsöffnung ausströmen.

Bei einer Ausführungsform des Entwässerungsventils ist der Druckraums gegenüber der Schalteinrichtung mittels einer Membran abgedichtet, welche oberhalb des Kondensatflusses angeordnet ist. Durch eine Anordnung der Membran im Wesentlichen außerhalb des Fließwegs des Kondensat-Druckluft-Gemischs wird die Gefahr reduziert, dass durch den Druckraum des Entwässerungsventils strömendes und/ oder sich in diesem sammelndes Kondensat eine Beschädigung einer im Druckraum angeordneten Membran verursachen kann.

Bei einer Weiterentwicklung des Entwässerungsventils weist die Austrittsöffnung zum Ableiten des Kondensats einen gegenüber der Verbindungsöffnung kleineren Querschnitt auf, welcher insbesondere als Düse wirkt. Durch den kleineren Querschnitt kann die Menge des entweichenden Kondensats bzw. der entweichenden komprimierten Luft begrenzt werden. Dabei kann der Querschnitt so klein ausgebildet sein, dass dieser als Düse wirkt. Hierdurch kann beispielsweise bei einem Festklemmen des Rückschlagventils in der Offenstellung während des Kompressorbetriebs nur ein durch den Querschnitt bestimmter Volumenstrom durch das Entwässerungsventil entweichen. Mittels geeigneter Dimensionierung des Querschnitts kann so ein Hilfskompressordruck aufrechterhalten werden, der zwar geringer ist als der Betriebsdruck des Kompressors, aber die Förderleistung des Kompressors wenigstens auf einem niedrigeren Niveau erhalten bleibt.

Bei einer anderen Ausführungsform des Entwässerungsventils ist an der Austrittsöffnung eine Düse angeordnet. Dabei kann, unabhängig von der Dimensionierung der Austrittsöffnung am Ventil, eine Düse an der Austrittsöffnung angeordnet werden, welche einen gegenüber der Austrittsöffnung geänderten Durchmesser bzw. eine geänderte Düsengeometrie aufweist. Auf diese Weise kann die Menge und Geschwindigkeit des ausströmenden Druckluft-Kondensat-Gemischs begrenzt und variiert werden.

Bei einer Ausführungsform des Entwässerungsventils ist der Querschnitt der Austrittsöffnung so dimensioniert, dass bei einem Ausfall der Schließfunktion des Rückschlagventils im Kompressorbetrieb der Förderleistungsverlust auf höchstens 10% begrenzt ist. Auf diese Weise kann die Versorgung eines mit dem Kompressor verbundenen Verbrauchers mit Druckluft sichergestellt werden.

Bei einer weiteren Entwicklung des Entwässerungsventils ist an der Verbindungsöffnung zum Kühler ein Filtersieb oder eine ähnliche geeignete Einrichtung angeordnet. Dieses Filtersieb am Ventileinlass dient dem Schutz des Entwässerungsventils vor einem Eindringen von Schmutzpartikeln aus dem Kühler durch die Verbindungsöffnung. So wird die Gefahr einer Undichtigkeit des Entwässerungsventils insbesondere aufgrund von sich an der Dichtfläche des Rückschlagventils sammelnden Schmutzpartikeln, welche eine korrekte Ventilschließung beeinträchtigen, verringert. Durch die Verwendung eines Filtersiebs reduziert sich ferner die Gefahr der Beschädigung einer im Entwässerungsventil angeordneten Membran.

Bei einer Ausführungsform des Entwässerungsventils sind die Schalteinrichtung und das Rückschlagventil sich gegenüberliegend im Druckraum angeordnet. Durch diese Anordnung von Schalteinrichtung gegenüber Rückschlagventil wirkt auf beide Elemente der im Druckraum anliegende Druck. Ferner wird eine geeignete Anordnung einer Wirkverbindung zwischen Schalteinrichtung und Rückschlagventil ermöglicht.

Bei einer Weiterentwicklung des Entwässerungsventils ist im Druckraum ein Stößel angeordnet, welcher die Wirkverbindung zwischen Schalteinrichtung und Rückschlagventil herstellt. Ein solcher Stößel ist vorzugsweise im Druckraum zwischen Schalteinrichtung und Rückschlagventil bewegbar geführt und bewirkt insbesondere eine mechanische Betätigung des Rückschlagventils aufgrund der Schaltstellung der Schalteinrichtung.

Bei einer Weiterentwicklung des Entwässerungsventils ist die Schalteinrichtung mittels eines Federelements vorgespannt. Dabei wirkt die Federkraft des Federelements beispielsweise auf ein hinter einer Membran angeordnetes Schaltelement der Schalteinrichtung, auf welches der im Druckraum anliegende Druck übertragen wird. Aufgrund der Wechselwirkung zwischen der Vorspannung des Federelements und dem im Druckraum anliegenden Druck ist die Schalteinrichtung insbesondere in verschiedene Schaltstellungen schaltbar.

Weitere Vorteile, Merkmale und Anwendungen der vorliegenden Erfindung gehen aus der folgenden Beschreibung in Verbindung mit den Figuren hervor.
- Fig. 1: zeigt ein im Stand der Technik bekanntes Entwässerungsventil;
- Fig. 2: zeigt ein Schaltbild eines beispielhaften erfindungsgemäßen Entwässerungsventils während des Kompressorruhebetriebs;
- Fig. 3: zeigt ein Schaltbild des beispielhaften erfindungsgemäßen Entwässerungsventils aus Fig. 2 während des Kompressorbetriebs; und
- Fig. 4: zeigt eine Schnittansicht einer beispielhaften Ausführungsform eines erfindungsgemäßen Entwässerungsventils.

**Fig. 1** zeigt das bereits beschriebene, aus dem Stand der Technik bekannte Entwässerungsventil 50 in einer Einsatzposition, in welcher eine Verbindungsöffnung 51 mit einem Kühler eines Verdichters (nicht dargestellt) verbunden ist. Das Entwässerungsventil 50 weist eine Luftglocke 55 auf, welche durch den Druck des durch die Verbindungsöffnung 51 einströmenden Luft-Kondensat-Gemischs entgegen der Kraft der Feder 57 im Kompressorbetrieb nach unten gedrückt wird. Dadurch wird das zentral am Entwässerungsventil 50 angeordnete Einlassventil 58 geöffnet, um Druckluft und Kondensat in den Glockenraum unterhalb der Membran 54 einströmen zu lassen. Dabei dichtet der im unteren Bereich angeordnete Ventilkolben 56 gegen den Auslass des Entwässerungsventils 50 ab. Sobald sich der Druck in den ober- und unterhalb der Luftglocke 55 angeordneten Kammern ausgleicht, wandert die Luftglocke 55 aufgrund der nach oben gerichteten Kraft der Feder 57 nach oben und schließt das Einlassventil 58. Erst im Kompressorruhebetrieb sinkt schließlich der Druck in der Kammer oberhalb der Membran 54, wodurch diese samt Luftglocke 55 und Ventilkolben 56 angehoben wird, damit das im Glockenraum angesammelte Kondensat ausströmen kann.

Da dieses Entwässerungsventil im Kompressorbetrieb nur wenige Sekunden lang geöffnet ist, kann nur eine geringe Menge Kondensat ausgestoßen werden.

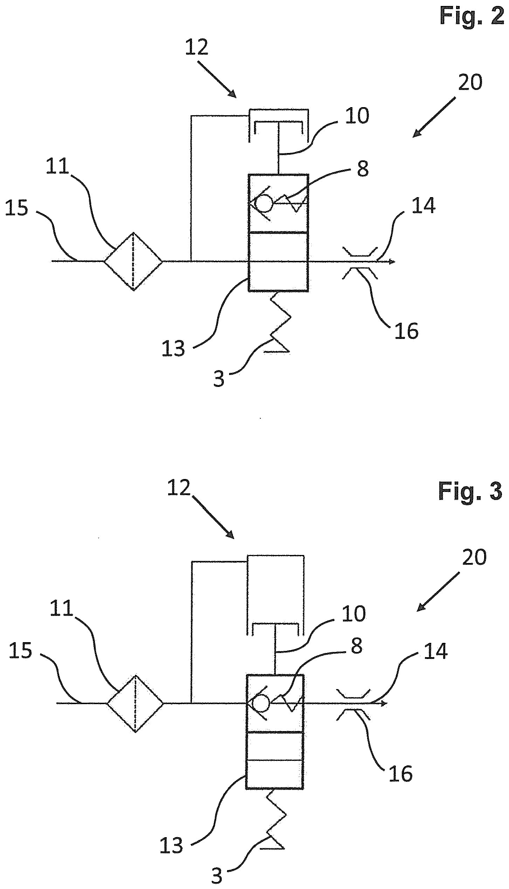

Fig. 2 zeigt ein Schaltbild eines beispielhaften erfindungsgemäßen Entwässerungsventils 20 während des Kompressorruhebetriebs, welches über eine Verbindungsöffnung 15 an einem nicht gezeigten Kühler eines Kompressors anordenbar ist. An der Verbindungsöffnung 15 ist ein Filtersieb 11 angeordnet, durch welches Verunreinigungen aus dem durch die Verbindungsöffnung 15 in das Entwässerungsventil 20 eintretende Druckluft-Kondensat-Gemisch herausgefiltert werden. Das Druckluft-Kondensat-Gemisch wirkt dann innerhalb des Entwässerungsventils 20 sowohl auf eine pneumatische Schalteinrichtung 12 als auch auf ein Rückschlagventil 13, welches in Fig. 2 in einer Offenstellung dargestellt ist. Im dargestellten Kompressorruhebetrieb ist die Schalteinrichtung 12 in einer Schaltstellung, in welcher das Rückschlagventil 13 durch die Schalteinrichtung 12 in eine Offenstellung geschaltet wird. Wie im Schaltbild der Fig. 2 gezeigt ist, kann dabei das Druckluft-Kondensat-Gemisch durch das geöffnete Rückschlagventil 13 über eine hinter dem Rückschlagventil 13 an der Austrittsöffnung 14 angeordnete Düse 16 ausströmen.

**Fig. 3** zeigt ebenfalls ein Schaltbild des beispielhaften erfindungsgemäßen Entwässerungsventils 20 aus Fig. 2 während des Kompressorbetriebs. Im Kompressorbetrieb strömt ein unter Druck stehendes Druckluft-Kondensat-Gemisch über eine Verbindungsöffnung 15 und ein Filtersieb 11 in das Entwässerungsventil 20 ein. Der im Druckluft-Kondensat-Gemisch herrschende Druck wirkt auf die Schalteinrichtung 12, welche bei ausreichend hohem Druck das Rückschlagventil 13 in die in Fig. 3 dargestellte Funktionsstellung schaltet. In diesem Schaltzustand des Entwässerungsventils 20 öffnet das Rückschlagventil 13 die Verbindung zwischen Verbindungsöffnung 15 und Auslassöffnung 14 in Abhängigkeit des Drucks des Druckluft-Kondensat-Gemischs, welches durch die Verbindungsöffnung 15 in das Entwässerungsventil eintritt. Übersteigt der Druck des Druckluft-Kondensat-Gemischs einen vorbestimmten Wert, so öffnet das Rückschlagventil 13, so dass das Druckluft-Kondensat-Gemisch und insbesondere das Kondensat über die Düse 16 und die Austrittsöffnung 14 abgeleitet wird.

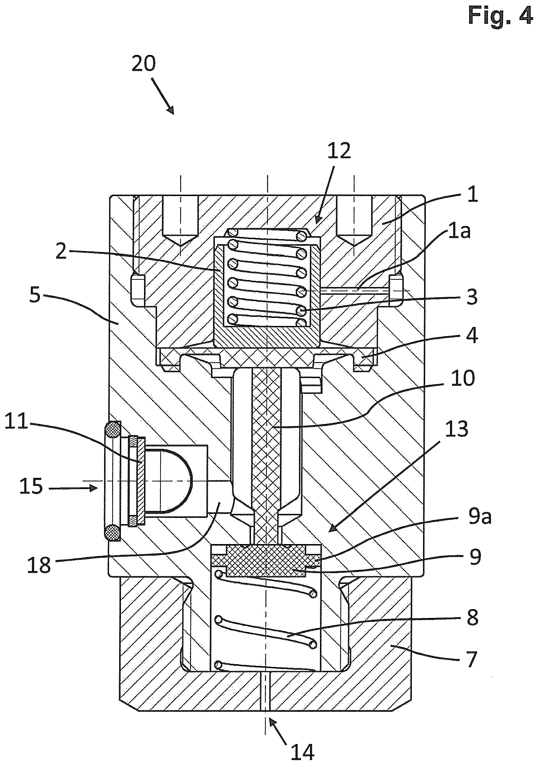

**Fig. 4** zeigt eine Schnittansicht einer beispielhaften Ausführungsform eines erfindungsgemäßen Entwässerungsventils in einer Einsatzposition. Das Entwässerungsventil 20 ist mittels einer Schraubverbindung an der Verbindungsöffnung 15 mit dem Innenraum eines Kühlers eines Kompressors (nicht gezeigt) verbindbar. An der Verbindungsöffnung 15 ist ein Filtersieb 11 angeordnet, durch welches ein aus dem Kühler austretendes Druckluft-Kondensat-Gemisch strömt und dabei von Verunreinigungen befreit wird. Das Druckluft-Kondensat-Gemisch tritt dabei in den Druckraum 18 des Entwässerungsventils 20 ein, und wirkt dort einerseits auf das Ventilelement 9 des Rückschlagventils 13 und andererseits auf die Membran 4 der Schalteinrichtung 12.

Die Schalteinrichtung 12 weist ein innerhalb eines Gehäuseeinsatzes 1 des Gehäuses 5 des Entwässerungsventils 20 angeordnetes Schaltelement 2 auf, welches durch ein Federelement 3 gegenüber dem Gehäuseeinsatz 1 in Richtung zum Druckraum 18 und zum Rückschlagventil 13 hin vorgespannt ist. Das Schaltelement 2 ist gegenüber dem Druckraum durch die Membran 4 abgedichtet. Ferner ist im Gehäuseeinsatz 1 ein Entlüftungskanal 1a angeordnet, der dazu dient, möglicherweise durch eine Undichtigkeit aus dem Druckraum 18 entweichende Druckluft abzuleiten, um den Aufbau eines Gegendrucks am Schaltelement 2 zu verhindern.

Im Kompressorruhebetrieb, d. h. wenn über die Verbindungsöffnung 15 kein nennenswerter Überdruck im Druckraum 18 anliegt, welcher bei der beispielhaften Ausführungsform unter 1,5 bar liegt, bewegt sich das Schaltelement 2 der Schalteinrichtung 12 mit der Membran 4 aufgrund der Vorspannung des Federelements 3 auf das Rückschlagventil 13 zu. Im Gehäuse 5 ist ein Stößel 10 frei beweglich auf einer Bewegungsbahn zwischen der Schalteinrichtung 12 und dem Rückschlagventil 13 angeordnet. Der Stößel 10 überträgt die Schaltbewegung der Schalteinrichtung 12 nach unten und stellt dabei eine Wirkverbindung zwischen Schalteinrichtung 12 und Rückschlagventil 13 her. In einer Schaltstellung der Schalteinrichtung 12, in welcher die Membran 4 auf einem inneren Absatz des Gehäuses 5 des Entwässerungsventils 20 anliegt (geringer Druck im Druckraum, das Federelement 3 bewegt das Schaltelement 2 in Richtung zum Rückschlagventil 13 - insbesondere im Kompressorruhebetrieb), wird das Rückschlagventil 13 entgegen der Kraft der Rückschlagfeder 8 geöffnet, wodurch das Druckluft-Kondensat-Gemisch nach unten durch die Austrittsöffnung 14 entweichen kann. Der Ventilelement 9 ist so ausgebildet, das dieses mittels mehrerer nach außen gerichteter Vorsprünge 9a innerhalb des Gehäuses 5 des Entwässerungsventils 20 geführt wird. Zwei der Vorsprünge 9a sind in Fig. 4 im Schnitt dargestellt. In Umfangsrichtung befinden sich zwischen den Vorsprüngen 9a Öffnungen, durch welche das Druckluft-Kondensat-Gemisch strömen kann.

Wird der Kompressor in Betrieb genommen und steigt der Druck des über die Verbindungsöffnung 15 in den Druckraum 18 des Entwässerungsventils 20 eintretenden Druckluft-Kondensat-Gemischs, wird durch diesen Druck die Membran 4 mit dem Schaltelement 2 gegen die Kraft des Federelements 3 nach oben bewegt. Dadurch wird die über den Stößel 10 hergestellte Wirkverbindung zwischen der Schalteinrichtung 12 und dem Rückschlagventil 13 getrennt. In der Folge schließt das Rückschlagventil 13. Bei dem beispielhaften Entwässerungsventil 20 liegt der Schließdruck bei ca. 1,5 bar.

Diese Schaltstellung des Entwässerungsventils 20 ist in Fig. 4 dargestellt. Durch weiter steigenden Druck wird die Membran 4 mit dem Schaltelement 2 entgegen der Kraft des Federelements 3 weiter nach oben bewegt. Der Stößel 10 bleibt dabei, nachdem die Wirkverbindung zwischen der Schalteinrichtung 12 und dem Rückschlagventil 13 bereits getrennt ist, unbewegt auf seiner Bewegungsbahn. Das Rückschlagventil 13 bleibt nun so lange geschlossen, bis der Druck des Druckluft-Kondensat-Gemischs im Druckraum 18 nicht über einen vorbestimmten Wert steigt. Steigt der Druck des Druckluft-Kondensat-Gemischs über diesen vorbestimmten Wert, wird dadurch das Ventilelement 9 des Rückschlagventils 13 gegen die Wirkung der Rückschlagfeder 8 nach unten bewegt. Auf diese Weise wird das Rückschlagventil 13 geöffnet, so dass Druckluft-Kondensat-Gemisch von der Verbindungsöffnung 15 über das Rückschlagventil 13 durch die Austrittsöffnung 14 ableitbar ist.

Das in Fig. 4 dargestellte Entwässerungsventil 20 wird vorzugsweise in der dargestellten Ausrichtung an einem Kühler angeordnet. In dieser Position kann kein in den Druckraum 18 des Entwässerungsventils 20 eintretendes Kondensat auf der im Entwässerungsventil 20 oben angeordneten Membran 4 stehen bleiben und zu einer Beschädigung dieser führen. Ferner kann Kondensat, welches das Rückschlagventil 13 bereits durchströmt hat, durch die an einem unten am Gehäuse 5 angeordneten Gehäuseteil 7 angeordnete Austrittsöffnung 14 das Entwässerungsventil 20 verlassen, auch wenn das Rückschlagventil 13 wieder geschlossen ist.

### BEZUGSZEICHENLISTE

- 1: Gehäuseeinsatz
- 1a: Entlüftungskanal
- 2: Schaltelement
- 3: Federelement
- 4: Membran
- 5: Gehäuse
- 7: Gehäuseteil
- 8: Rückschlagfeder
- 9: Ventilelement
- 9a: Vorsprung
- 10: Stößel
- 11: Filtersieb
- 12: Schalteinrichtung
- 13: Rückschlagventil
- 14: Austrittsöffnung
- 15: Verbindungsöffnung
- 16: Düse
- 18: Druckraum
- 20: Entwässerungsventil
- 50: Entwässerungsventil
- 51: Verbindungsöffnung
- 54: Membran
- 55: Luftglocke
- 56: Ventilkolben
- 57: Feder
- 58: Einlassventil

## Patentansprüche

1. Entwässerungsventil für einen Kühler eines Kompressors mit einem Druckraum (18), welcher über eine Verbindungsöffnung (15) mit dem Innenraum eines Kühlers verbindbar ist, und einer Austrittsöffnung (14) zum Ableiten eines Kondensats, das Entwässerungsventil (20) weist eine pneumatische Schalteinrichtung (12) sowie ein Rückschlagventil (13) auf, welche mit dem Druckraum (18) wirkverbunden sind, wobei zwischen der Schalteinrichtung (12) und dem Rückschlagventil (13) eine Wirkverbindung besteht, mittels welcher das Rückschlagventil (13) von der Schalteinrichtung (12) in eine Offenstellung schaltbar ist, wobei im Kompressorruhebetrieb das Rückschlagventil (13) mittels der Schalteinrichtung (12) in eine Offenstellung schaltbar ist, so dass Kondensat von der Verbindungsöffnung (15) über das Rückschlagventil (13) durch die Austrittsöffnung (14) ableitbar ist, **dadurch gekennzeichnet, dass** während des Kompressorbetriebs aufgrund des Drucks im Druckraum (18) die Wirkverbindung zwischen der Schalteinrichtung (12) und dem Rückschlagventil (13) getrennt ist.

2. Entwässerungsventil nach Anspruch 1, **dadurch gekennzeichnet, dass** das Rückschlagventil (13) durch den am Rückschlagventil (13) anliegenden Druck im Druckraum (18) in eine Offenstellung schaltbar ist, wenn der Druck im Druckraum (18) einen vorbestimmten Wert überschreitet.

3. Entwässerungsventil nach einem der einem der vorhergehenden Ansprüche, **dadurch gekennzeichnet, dass** der Druckraum (18) gegenüber der Schalteinrichtung (12) mittels einer Membran (4) abgedichtet ist, welche oberhalb des Kondensatflusses angeordnet ist.

4. Entwässerungsventil nach einem der vorhergehenden Ansprüche, **dadurch gekennzeichnet, dass** an der Austrittsöffnung (14) eine Düse (16) angeordnet ist oder dass die Austrittsöffnung (14) zum Ableiten des Kondensats einen gegenüber der Verbindungsöffnung (15) kleineren Querschnitt aufweist, der insbesondere als Düse (16) wirkt.

5. Entwässerungsventil nach einem der vorhergehenden Ansprüche, **dadurch gekennzeichnet, dass** an der Verbindungsöffnung (15) zum Kühler ein Filtersieb (11) angeordnet ist.

6. Entwässerungsventil nach einem der vorhergehenden Ansprüche, **dadurch gekennzeichnet, dass** die Schalteinrichtung (12) und das Rückschlagventil (13) sich gegenüber liegend im Druckraum (18) angeordnet sind.

7. Entwässerungsventil nach einem der vorhergehenden Ansprüche, **dadurch gekennzeichnet, dass** im Druckraum ein Stößel (10) angeordnet ist, welcher die Wirkverbindung zwischen Schalteinrichtung (12) und Rückschlagventil (13) herstellt.

8. Entwässerungsventil nach einem der vorhergehenden Ansprüche, **dadurch gekennzeichnet, dass** die Schalteinrichtung (12) mittels eines Federelements (3) vorgespannt ist.

## Claims

1. Drain valve for a cooler of a compressor, with a pressure chamber (18) which is connectable to the interior of a cooler via a connecting opening (15), and an outlet opening (14) for removing a condensate, the drain valve (20) has a pneumatic switching device (12) and a non-return valve (13), which are operatively connected to the pressure chamber (18), wherein there is an operative connection between the switching device (12) and the non-return valve (13), by means of which the non-return valve (13) is switchable by the switching device (12) into an open position, wherein in the idle mode of the compressor, the non-return valve (13) is switchable by means of the switching device (12) into an open position such that condensate can be removed from the connecting opening (15) through the outlet opening (14) via the non-return valve (13). **characterised in that** during the compressor mode, the operative connection between the switching device (12) and the non-return valve (13) is severed because of the pressure in the pressure chamber (18).

2. Drain valve according to claim 1, **characterised in that** the non-return valve (13) is switchable by the pressure which is applied to the non-return valve (13) in the pressure chamber (18) into an open position when the pressure in the pressure chamber (18) exceeds a predetermined value.

3. Drain valve according to any of the preceding claims, **characterised in that** the pressure chamber (18) is sealed in relation to the switching device (12) by means of a membrane (4) which is arranged above the condensate flow.

4. Drain valve according to any of the preceding claims, **characterised in that** a nozzle (16) is arranged at the outlet opening (14), or **in that** the outlet opening (14) for removing the condensate has a cross section which is smaller than the connecting opening (15) and acts in particular as a nozzle (16).

5. Drain valve according to any of the preceding claims, **characterised in that** a filter screen (11) is arranged at the connecting opening (15) to the cooler.

6. Drain valve according to any of the preceding claims, **characterised in that** the switching device (12) and the non-return valve (13) are arranged lying opposite each other in the pressure chamber (18).

7. Drain valve according to any of the preceding claims, **characterised in that** a tappet (10) which produces the operative connection between switching device (12) and non-return valve (13) is arranged in the pressure chamber.

8. Drain valve according to any of the preceding claims, **characterised in that** the switching device (12) is preloaded by means of a spring element (3).

## Revendications

1. Soupape de purge d'un refroidisseur d'un compresseur, comprenant un espace (18) sous pression, qui peut, par une ouverture (15) de communication, communiquer avec l'intérieur d'un refroidisseur, et une ouverture (14) de sortie pour l'évacuation d'un produit condensé, la soupape (20) de purge ayant, en outre, un dispositif (12) pneumatique de commutation, ainsi qu'un clapet (13) antiretour, qui sont en liaison d'action à l'espace (18) sous pression, dans lequel il y a, entre le dispositif (12) de commutation et le clapet (13) antiretour, une liaison d'action au moyen de laquelle le clapet (13) antiretour peut être mis par le dispositif (12) de commutation en une position ouverte, dans laquelle, dans la position de repos du compresseur, le clapet (13) antiretour peut être mis, au moyen du dispositif (12) de commutation, dans une position ouverte, de manière à pouvoir évacuer le produit condensé par l'ouverture (15) de communication, par l'intermédiaire du clapet (13) antiretour, en passant par l'ouverture (14) de sortie, **caractérisée en ce que**, pendant le fonctionnement du compresseur, en raison de la pression dans l'espace (18) sous pression, la liaison d'action entre le dispositif (12) de commutation et le clapet (13) antiretour est coupée.

2. Soupape de purge suivant la revendication 1, **caractérisée en ce que** le clapet (13) antiretour peut être mis dans une position ouverte par la pression régnant dans la chambre (18) sous pression et s'appliquant au clapet (13) antiretour, si la pression dans la chambre (18) sous pression dépasse une valeur déterminée à l'avance.

3. Soupape de purge suivant l'une des revendications précédentes, **caractérisée en ce que** l'espace (18) sous pression est rendu étanche par rapport au dispositif (12) de commutation au moyen d'une membrane (4), qui est disposée au-dessus du flux de produit condensé.

4. Soupape de purge suivant l'une des revendications précédentes, **caractérisée en ce qu'**une buse (16) est mise sur l'ouverture (14) de sortie ou **en ce que** l'ouverture (14) de sortie a, pour évacuer le produit condensé, une section transversale, servant notamment de buse (16), plus petite que l'ouverture (15) de communication.

5. Soupape de purge suivant l'une des revendications précédentes, **caractérisée en ce qu'**un tamis (11) de filtration est mis sur l'ouverture (15) de communication vers le refroidisseur.

6. Soupape de purge suivant l'une des revendications précédentes, **caractérisée en ce que** le dispositif (12) de commutation et le clapet (13) antiretour sont disposés l'un contre l'autre dans l'espace (18) sous pression.

7. Soupape de purge suivant l'une des revendications précédentes, **caractérisée en ce que**, dans l'espace sous pression est disposé un poussoir (10), qui donne la liaison d'action entre le dispositif (12) de commutation et le clapet (13) antiretour.

8. Soupape de purge suivant l'une des revendications précédentes, **caractérisée en ce que** le dispositif (12) de commutation est précontraint au moyen d'un élément (3) de ressort.
